# EUROPEAN PATENT SPECIFICATION

(11) **EP 4 430 955 B1**
(45) Date of publication and mention of the grant of the patent: **18.11.2026**
(21) Application number: 24177298.7
(22) Date of filing: 10.03.2021
(51) Int. Cl.: A23J 3/14, A23J 3/16, A23J 3/18, A23J 3/20, A23J 3/22

(54) **METHOD FOR PRODUCING A FOOD PRODUCT**
VERFAHREN ZUR HERSTELLUNG EINES LEBENSMITTELPRODUKTS
PROCÉDÉ DE FABRICATION D'UN PRODUIT ALIMENTAIRE

(30) Priority: 10.03.2020 WO PCT/IB2020/052047
(43) Date of publication of application: 18.09.2024
(62) Document number(s) of the earlier application(s) in accordance with Art. 76 EPC: 21712905.5 / 4 117 449
(73) Proprietor: Planted Foods AG, 8310 Kemptthal (CH)
(72) Inventor: Wemmer, Judith, 8005 Zürich (CH); Böni, Lukas Johannes, 8057 Zürich (CH)
(74) Representative: Vossius & Partner Patentanwälte Rechtsanwälte mbB

(56) References cited:
- WO-A1-00/69276
- WO-A1-2004/045301
- WO-A1-2016/150834
- GB-A- 1 395 311
- US-A1- 2017 258 109
- RAFFAEL OSEN ET AL: "High moisture extrusion cooking of pea protein isolates: Raw material characteristics, extruder responses, and texture properties", JOURNAL OF FOOD ENGINEERING, vol. 127, 4 December 2013 (2013-12-04), GB, pages 67 - 74, XP055331887, ISSN: 0260-8774, DOI: 10.1016/j.jfoodeng.2013.11.023

## Description

### Technical Field

The present disclosure relates to a method of producing a fibrous protein product, a device for performing the method, a product obtained by the method and a use of the device. The invention is illustrated by claims 1 to 11.

### Background Art

Processes for texturization of plant proteins have gained in popularity due to the increasing demand of meat alternatives. Texturized/textured vegetable proteins (TVP) or textured protein (TP) in general may be produced by extrusion at either high or low moisture contents resulting in high moisture/wet TP and dry TP, respectively.

E.g. low moisture extrusion (up to 35wt% water) of proteins-based formulations is widely used in food and pet food industry and results in dry and expanded texturized protein structures. The sponge like structure allows rapid rehydration prior to consumption (Osen et al., "High moisture extrusion cooking of pea protein isolates: Raw material characteristics, extruder responses, and texture properties", J. of Food Engineering, 127 (2014) 67-74).

These dry extrudates are often milled, cut or shredded to generate texturized protein flakes, which can be re-hydrated, glued together with adhesive additives and shaped into various meat-like products such as nuggets, burger patties or ground meat.

In addition, for example WO 00/69276 discloses a method of manufacturing a texturised proteinaceous meat analogue product. Therefore, a mixture comprising about 40 to 95% by weight edible proteinaceous materials and up to about 7% by weight of edible mineral binding and crosslinking compounds is subjected to mechanical pressure and added heat sufficient to convert the mixture into a hot, viscous protein lava. The protein lava is extruded through and from a temperature controlled cooling die which cools and reduces the viscosity of the protein lava to obtain a cohesive, texturized, extrudate slab or ribbon. The solidified extrudate slab or ribbon is subjected to mechanical shredding in a hammer mill, to obtain a plurality of extrudate shreds that resemble in consistency and texture flaked or shredded meat.

Milling or shredding of dry/dried TVP into flakes has the purpose of decreasing particle size without specially taking care of structure preservation or targeted structure alteration. Hence, unlike processed meat products, vegetarian alternatives made from dry TVP flakes often lack a sophisticated structure after post-extrusion processing and thus do not resemble animal meat cuts. This results in a lack of biting strength and fibrous structure and texture.

In contrast, texturization processes at high moisture content (over 35wt% water), such as by high moisture extrusion cooking, shear cell processing or fiber spinning, results in the formation of wet TVP with long aligned fibers, also referred to as high moisture meat analogue, which can be consumed as such without prior rehydration. The resulting fibrous structure with high moisture content resembles the structure of animal tissue and has a chewy texture and high biting strength similar to cooked meat, fish or seafood.

Although various production processes for wet TVP are established, post-processing to turn the texturized protein product into food applications with fibrous appearance, shape and texture similar to existing processed animal-based products is more challenging due to its high tensile strength, stiffness and smooth surface.

In addition, simple cutting of wet TVP, e.g. into strips, cubes and other well-defined geometrical shapes is often performed by many producers of meat analogues using machines designed for animal meat. However, this simple cutting does not allow to well preserve or transform the fibrous structure of the texturized products.

Additionally, the smooth cut does not remind of meat-like products as it fails to highlight the fibrosity and is thus perceived more "unnatural" and "processed" by the consumer. This perception is further supported by the generally smooth surfaces and angular shapes of texturized protein products, owning to the well-defined geometrical shapes in the formative steps of the texturization processes.

### Disclosure of the Invention

The problem to be solved by the present invention is therefore to provide a method for post-processing of wet TP respectively processing of an in particular deformed fibrous protein product that overcomes the disadvantageous of the prior art.

The problem is solved by the subjects of the independent claim.

Unless otherwise stated, the following definitions shall apply in this specification:
The terms "a", "an", "the" and similar terms used in the context of the present invention are to be construed to cover both the singular and plural unless otherwise indicated herein or clearly contradicted by the context. Further, the terms "including", "containing" and "comprising" are used herein in their open, non-limiting sense. The term "containing" shall include both, "comprising" and "consisting of".

**Percentages** are given as weight-%, unless otherwise indicated herein or clearly contradicted by the context.

The term **"fibrous structure"** refers to a structure in which fiber bundles / fiber aggregates / aggregated fibers / fibre sheets, in particular consisting of proteins, show a high degree of alignment in one direction resulting in anisotropy characteristics regarding structure and mechanical properties of the fibrous structure. The fibrous structure is formed in the texturization process. The fibrous structure is comprised of multiple fiber bundles / fiber aggregates / aggregated fibers / fiber sheets referred to as fibrous microstructure.

The term **"plant fibers" or dietary fibers"** denotes carbohydrate polymers with 10 or more monomeric units, which are not hydrolysed by the endogenous enzymes in the small intestine of humans. The solubility of dietary fibre is determined by the relative stability of the ordered and disordered form of the polysaccharide. Molecules that fit together in a crystalline array are likely to be energetically more stable in solid state than in solution. Hence, linear polysaccharides, i.e., cellulose, tend to be insoluble (non-soluble), while branched polysaccharides or polysaccharides with side chains, such as pectin or modified cellulose, are more soluble. Hence, non-soluble fibre denotes fibre with low or no solubility in water. This might however contain residues of soluble fibre due to the production/extraction process. Soluble fibre denotes dietary fibre with high solubility such as pectin. Examples of plant fibres in regard of the invention are non-starch plant polysaccharides, such as cellulose fibre, for example citrus fibre, hemicelluloses, pectin, β-glucans, mucilages and gums.

The terms **"elastic-plastic deformation"** or **"elastic-plastically deforming"** refer to a characteristic of a material. If a sufficient load is applied to a material, this will cause the material to change the shape. A temporary shape change that is self-reversing after the force is removed is called elastic deformation. If the load that is applied to the material is sufficient to permanently deform the material, the deformation is called plastic deformation. The elastic-plastic deformation refers to a deformation where the material is partly elastically deformed, but in addition, at least partly, also undergoes a plastic deformation.

A **"wet or high-moisture textured or texturized protein (TP) or high-moisture meat analogue (HMMA)"** is the result of subjecting a moist, heat-settable proteinaceous material to heat setting, shear and/or elongational flow, and optionally pressure to form a continuous fibrous or lamellar structure resembling the natural structure of animal meat, seafood or fish. The production process of wet TP or HMMA is referred to as texturization process.

The invention refers to a method of producing an in particular deformed fibrous protein product from a wet textured product material. Advantageously, the invention refers to a method for changing the texture of a protein product. Advantageously, the product in an embodiment of the invention is a meat analogue.

The wet textured product material comprises at least 10wt% of proteins possessing a fibrous structure and at least 35%wt water. The fibrous protein product being selected from the group consisting of a deformed product, an initial pulled product (wherein the term "initial" refers to a pulled product that has not yet been processed to become a block product), a block product, and a final pulled product (wherein the term "final" refers to a pulled product that has been processed into a block product before) . The method comprises further the step of a) elastic-plastically deforming the wet textured product material and thereby changing the fibrous structure to obtain the deformed product.

Advantageously, the term "changing" refers to loosening or weakening of the fibrous structure. The term "loosening" of the fibrous structure might describe a behaviour wherein the individual fibres of the fibrous structure that are aligned in bundles divide into sheets, smaller bundles, or individual fibres during the deformation. In addition, the term "weakening" of the fibrous structure might refer to the mechanical properties, wherein the fibrous structure loses strength of the bonds of the bundles of fibres comprised in the fibrous structure while being deformed, resulting in decreased stiffness, toughness, strength or tensile strength.

In particular, the resulting changed structure as such resembles a processed meat product or can be pulled into single fiber bundles or fibrous pieces while preserving the fibrous microstructure.

Advantageously, by the elastic-plastic deformation of the material, parts of the deformed fibrous structure are permanently deformed and parts of the deformed fibrous structure return back into their original shape. In contrast, dough-like and paste-like products, e.g., puff pastry dough or marzipan, undergo mostly plastic deformation in sheeting or rolling processes resulting in a product thickness after sheeting or rolling similar to the thickness at maximum compression h_{comp}. The substantial elastic deformation and elastic recovery or relaxation exhibited by the material and process in this invention leads to changing, in particular weakening or loosening, of the macrostructure while preserving the fibrous microstructure.

In particular the material product comprising at least 35%wt of water, being elastic-plastically deformed and thereby changing the fibrous structure to obtain the deformed product, distinguishes over prior art in that it results in a deformed fibrous protein product that overcomes the disadvantageous of the prior art.

The product material is a wet textured material, in particular a wet or high-moisture textured or texturized protein (TP) or a high moisture meat analogue (HMMA).

Advantageously, such wet textured product material is textured by means of high moisture extrusion cooking, printing, kneading, rolling, fiber spinning and/or shear cell processing.

In an advantageous embodiment of the invention, the wet textured product material is an extrudate obtained by a high moisture extrusion cooking process (HMEC). In particular, the extrudate might be produced by a process according to an extrusion process similar to Osen et al.

A further advantageous method comprises a subsequent step b) of pulling or cutting apart the deformed product to obtain the initial pulled product. Advantageously, the initial pulled product comprises one or more fibrous pieces.

The term "fibrous pieces" might in particular refer to individual fibres of the wet textured product material, bundles of fibres or sheets of fibers of the wet textured product material. Furthermore, the term "fibrous pieces" might in particular also refer to flakes that form from the wet textured product material or to pieces that resemble pulled meat.

Advantageously, such pulling or cutting of the deformed material is performed by means of pin rolls, textured rolls, hammer mills, cutting devices, forks, or knives respectively.

A further advantageous method comprises the subsequent step c) of forming the initial pulled product to a block product.

In particular, a mixture of the initial pulled product and an adhesive matrix material, such as emulsions, protein solutions, fats, oils or hydrocolloid solutions, is formed to obtain the block product.

In particular, the block product is formed from the initial pulled product by means of vacuum or pressing procedures. Forming the block product by means of vacuum means or pressing procedure refers in particular to the method step of densifying the pulled product such that the pulled product forms a block product. In particular, fibrous pieces of the initial pulled product are densified to a block product.

A further advantageous method comprises the subsequent step d) of pulling the block to obtain a finished pulled product. In particular, this means that a user might pull apart the densified fibrous pieces of the block product into individual pieces, e.g. for preparing a menu, in particular for preparing a menu with fibrous pieces that resemble a processed meat menu.

The in particular deformed fibrous protein product is a slaughter-free protein product, resembling processed meat products.

A further advantageous method of the invention produces an in particular deformed fibrous protein product from a wet textured product material that is a slaughter-free product resembling processed meat products.

In particular, the term "resembling processed meat" is intended to point out that the in particular deformed fibrous protein product might have similar characteristics and properties as processed meat, respectively imitates the characteristics of processed meat. Such similar characteristics might refer to the similar fibrous structure of meat if compared to the in particular deformed fibrous protein product or to the similar texture of the in particular deformed fibrous protein product or to the similar appearance of the in particular deformed fibrous protein product if compared to processed meat.

Advantageously, the protein component of the wet textured product material is selected from the group of pea, soy, wheat, sunflower, pumpkin, rice, cereals, pulses, oil seeds, algae, fungi, single cells and/or fermented components. In addition, the wet textured product material might comprise combinations of said protein components.

Advantageously, the wet textured product material (11) is an extrudate produced by high moisture extrusion (>35%wt).

Advantageously, the wet textured product material (11) is a wet textured protein produced at high moisture content (>35%wt) by high moisture extrusion cooking, shear cell processing, kneading, rolling, fiber spinning and/or printing (>35%wt).

In an alternative embodiment of the invention, the wet textured product material is dried before method step a), deforming of the wet textured product material. In this alternative embodiment, the wet textured product material is in particular a wet textured material, which comprises at least 10wt% proteins possessing a fibrous structure and less than 35wt% water.

Further, advantageously, the wet textured product material might comprise further plant cells, starch, muscle cells, flavours, spices, dietary fibres, hydrocolloids, salt, fat, oil, bacterial cells, yeast cells, algae cells, carbohydrates, in particular reducing sugar, and/or fungal components.

In particular the cells comprised in the wet texture product material might be intact or disrupted.

In particular, the dietary fibres are selected from a source of plants, in particular cereals, pulses, oil seeds, vegetables, fruit, or from a source of bacteria, yeast, fungi, algae or a combination thereof.

Advantageously, the product material comprises 10-65%wt of protein, in particular comprises 10-40wt% of protein. In particular, the protein is selected from the list mentioned above.

In an alternative embodiment, the wet textured product material comprises an amount of pea protein, in particular 1wt% ≤ pea protein ≤ 50wt%, very particular 10wt% ≤ pea protein ≤ 40wt%, wherein the pea protein might be from one supplier and/or source, or from two suppliers and/or sources, or from three suppliers and/or sources, or from four suppliers and/or sources, or from five supplier and/or sources.

In a further advantageous embodiment, the wet textured product material comprises an amount of water 45wt% ≤ water ≤ 70wt%, in particular.

In a further advantageous embodiment, the wet textured product material comprises 10wt% ≤ proteins possessing a fibrous structure ≤ 50wt%.

In a further advantageousembodiment, the wet textured product material comprises an amount of sunflower protein, in particular 1wt% ≤ sunflower protein ≤ 50wt%, very particular 5wt% ≤ sunflower protein ≤ 30wt%, wherein the sunflower protein might be from one supplier and/or source, or from two suppliers and/or sources, or from three suppliers and/or sources, or from four suppliers and/or sources, or from five supplier and/or sources.

In a further advantageous, the wet textured product material comprises at least 35wt% water, in particular the amount of water is 45wt% ≤ water ≤ 70wt%, pea protein at an amount of 1wt% ≤ pea protein ≤ 40wt%, sunflower protein at an amount of 1wt% ≤ sunflower protein ≤ 25wt%, oat protein at an amount of 1wt% ≤ oat protein ≤ 15wt%, or pea fiber at an amount of 1wt% ≤ pea fiber ≤ 25wt%, and a combination thereof.

In a further advantageous, the wet textured product material comprises at least 35wt% water, in particular the amount of water is 45wt% ≤ water ≤ 70wt%, pea protein at an amount of 1wt% ≤ pea protein ≤ 50wt%, soy protein at an amount of 1wt% ≤ soy protein ≤ 50wt%, or one or several dietary fiber components at an amount of 0.5wt% ≤ dietary fiber ≤ 25wt%, and a combination thereof.

In a further advantageous embodiment, the wet textured product material comprises at least 35wt% water, in particular the amount of water is 45wt% ≤ water ≤ 70wt%, pea protein at an amount of 1wt% ≤ pea protein ≤ 50wt%, potato protein at an amount of 1wt% ≤ potato protein ≤ 25wt%, or one or several dietary fiber components at an amount of 0.5wt% ≤ dietary fiber ≤ 25wt%, and a combination thereof.

In a further advantageous embodiment, the wet textured product material comprises at least 35wt% water, in particular the amount of water is 45wt% ≤ water ≤ 70wt%, pea protein at an amount of 1wt% ≤ pea protein ≤ 50wt%, rice protein at an amount of 1wt% ≤ rice protein ≤ 25wt%, or one or several dietary fiber components at an amount of 0.5wt% ≤ dietary fiber ≤ 25wt%, and a combination thereof.

In a further advantageous embodiment, the wet textured product material comprises at least 35wt% water, in particular the amount of water is 45wt% ≤ water ≤ 70wt%, pea protein at an amount of 1wt% ≤ pea protein ≤ 50wt%, yeast protein at an amount of 1wt% ≤ yeast protein ≤ 25wt%, or one or several dietary fiber components at an amount of 0.5wt% ≤ dietary fiber ≤ 25wt%, and a combination thereof.

In a further advantageous embodiment, the protein component in the wet textured product material might be selected from the group consisting of protein isolate, protein concentrates, protein-containing flours, and milled oil seed press cakes.

In a further advantageous embodiment, the protein component in the wet textured product material might be two or three proteins of the same source and/or plant origin with different levels of solubility.

In a further advantageous embodiment, the wet textured product material comprises pea protein at an amount of 1wt% ≤ pea protein ≤ 50wt%, at least 35wt% of water, and/or one or several dietary fiber components at an amount of 0.5wt% ≤ dietary fiber ≤ 25wt% selected from the group consisting of cellulosic polymers, arabinoxylan polymers, such as beta-glucan, fructan polymers, such as inulin, and n-acetylglucosamin polymers, such as chitin, or pea fibers, oat fibers or bran, citrus fibers, carrot fibers, beetroot fibers, apple fibers, rice fibers.

In a further advantageous embodiment, the wet textured product material is a foamed material, in particular comprising a gas volume fraction of at least 1vol% but not more than 50vol%. In very particular, the gas was incorporated during wet texturization.

Advantageously, the wet textured product material temperature during the deformation of the wet textured product material is within the range of 10°-100°C, in particular within the range of 30°-90°C, very particular within a temperature range of 50-90°C. The wet textured product material temperature refers in particular to the temperature to which the wet textured product material is heated before the deformation. In particular, the means for heating the wet textured product material is the texturization process. In particular, the means for deforming the wet textured product material might be configured to keep the wet textured product material heated at said temperature during the deformation.

Advantageously, the wet textured product material has an anisotropic structure resulting in anisotropic mechanical properties.

In a further advantages method according to the invention, step a), the elastic-plastic deformation of the wet textured product material to change the fibrous structure, is performed by means of rolling the wet textured product material at least once, in particular twice. In particular, the wet textured product material can be rolled three, four, or five times.

Advantageously, the wet textured product material is rolled in a direction parallel to a direction (r) of the wet textured product material and/or in a direction normal to the direction (r) of the fibrous structure.

The present diclosure refers to a product obtained by the method according to the first aspect of the invention.

Advantageously, the product is a food product. In particular, the food product resembles a processed meat product.

The present disclosure refers to a device for performing the method according to the first aspect of the invention.

An advantageous device comprises rolling means for elastic-plastically deforming the wet textured product material to obtain the deformed product.

Advantageously, such rolling means are a pair of rolls. In particular, the rolls are configured to counter-rotate. The rolls of the rolling means or of the pair of rolls might rotate with the same rotation velocity or with different rotation velocities. In particular, the rolls rotate at a rotational speed of above 0.5 rotations per minute (rpm). In particular, the wet textured product material might roll multiple times through the rolls until the deformed product is obtained.

In particular, the rolling means might be configured as multiple rolling pairs, in particular as two or three rolling pairs that might be connected in series.

In particular, the device comprises further a feeding mechanism for feeding the wet textured product material into the rolling means. Such feeding mechanism might be another pair of rolls or a funnel. In particular, the feeding mechanism can comprise multiple pairs of rolls that are connected in sequence and guide the wet textured product material to the means for elastic-plastically deforming the wet textured product material.

In a further advantageous embodiment, the rolling means comprise at least one pair of rolls, in particular two, three, four, or five pairs of rolls that might be connected in series.

In particular, the pulling means comprise a hammer mill.

In particular, the surface of the rolls might be smooth or rough or textured.

In particular, the rolls might be temperature-controlled.

Advantageously, there is a roller gap rg1 between the two rolls, with rg1 ≤ 0.8 of the height of the wet textured product material, in particular with rg1 ≤0.4 of the height of the wet textured product material, very particular with a roller gap size rg1 of 0.1 mm ≤ rg1 ≤ 3.6 mm.

In a further advantageous embodiment of the invention, the elastic-plastic deformation of the wet textured product material by means of at least one pair of rolls results in a thickness t_{dp} of the deformed fibrous protein product respectively the deformed product of below the height or thickness of the wet textured product material but above or larger than the roller gap size rg1. in particular the thickness t_{dp} is ≥ 2.5 times the roller gap size rg1 or the thickness at maximum compression h_{comp} due to elastic recovery after deformation, in very particular the thickness t_{dp} is ≥ 2.5 times the roller gap size rg1 or the thickness at maximum compression h_{comp} and ≤ 7 times the roller gap size rg1 or the thickness at maximum compression h_{comp}, very particular wherein 0.7mm ≤ t_{dp} ≤ 9mm.

In a further advantageous embodiment, the elastic-plastically deformation of the wet textured product material results in the deformed product with a thickness t_{dp} smaller than the height h of the wet textured product material and a thickness t_{dp} larger than the roller gap size rg1 or than the thickness at maximum compression h_{comp}, in particular the thickness t_{dp} is ≥ 2.5 times the roller gap size rg1 or the thickness at maximum compression h_{comp}, in very particular the thickness t_{dp} is ≥ 2.5 and ≤ 7 times the roller gap size rg1 or the thickness at maximum compression h_{comp}.

In particular, the thickness t_{dp} of the deformed fibrous protein product is defined as the height of the deformed fibrous protein product which is shortest length in a direction perpendicular to the rolling direction and perpendicular to the rotation axis of the rolls of the pair of rolls.

In particular, the wet textured product material has a height h, wherein the height might be defined as the thickness of the wet textured product material.

In a further advantageous embodiment, the height or thickness of the wet textured product material is reduced prior to elastic-plastic deformation, advantageously by means of cutting.

In particular, the height or thickness of the wet textured product material is reduced by cutting the wet textured product material into thin individual layers, in particular by cutting the wet textured product material into 2, 3, or more than three layers prior to elastic-plastic deformation. Very particular, at least one layer further undergoes elastic-plastic deformation.

In particular, the roller gap or roller gap size rg1 is defined as the shortest distance between the surfaces of the respective rolls of the pair of rolls.

In particular, the product thickness refers to a smallest diameter of the wet textured product material or to an average diameter of wet textured product material before feeding it into the pair of rolls.

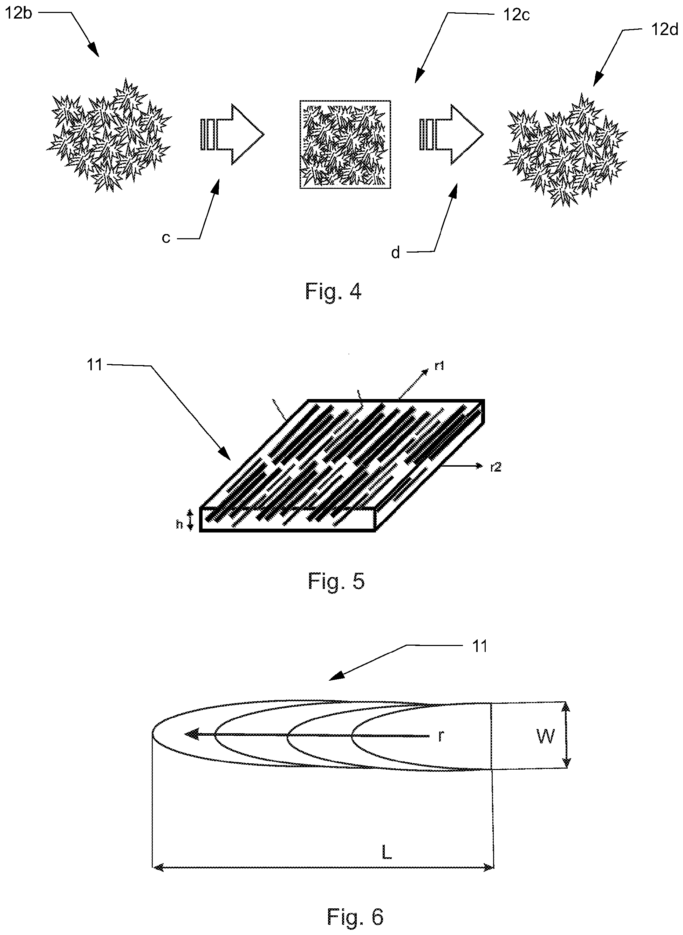

Very particular, the product thickness might further refer to an average height h of the wet textured product material before feeding it into the pair of rolls. A height h might be a direction perpendicular to the direction and extension of the fibrous structure, in particular perpendicular to r1 and r2 as shown in Fig. 5.

A further advantageous device comprises pulling means for pulling the deformed product to obtain the initial pulled product. In particular, the pulling means comprise a pair of pin-rolls. The pins of the pin-rolls might have the form of spikes, nubs, spins, etc. In particular, they are equally distributed over both rolls. In particular, the rolls of the pair of pin-rolls rotate with the same rotation velocity. In another embodiment, the pin-rolls might rotate with different rotation velocities.

In particular, the pulling means comprise a pair of textured rolls.

In particular, the pulling means comprise a shredder.

In particular, the pulling means comprise a blunt blade shearing off fibrous pieces.

In particular, the pulling means comprise a cutting machine.

In an advantageous device, the device shall comprise of one device or one, two, three, four, five devices in sequence.

The present disclosure refers to a use of the device according to the third aspect of the invention for manufacturing of a fibrous protein product.

In particular, more than one device connected in sequence is used.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows a diagram of method steps for producing a fibrous protein product according to an embodiment of the method;
Fig. 2 shows a schematic of a method and a device for performing the method according to an embodiment of the invention;
Fig. 3 shows a further schematic of a method and a device for performing the method according to an embodiment of the invention;
Fig. 4 shows a schematic of method steps according to an embodiment of the invention;
Fig. 5 shows a section of a wet textured product material according to an embodiment of the invention;
Fig. 6 shows a schematic of a wet textured product material according to an embodiment of the invention;
Fig. 7 shows experimental data of example 1;
Fig. 8 shows experimental data of example 1;
Fig. 9 shows a photograph of deformed products according to example 2;
Fig. 10 shows a schematic of the experiment according to example 3;
Fig. 11 shows photographs of deformed products and pulled products according to example 3;

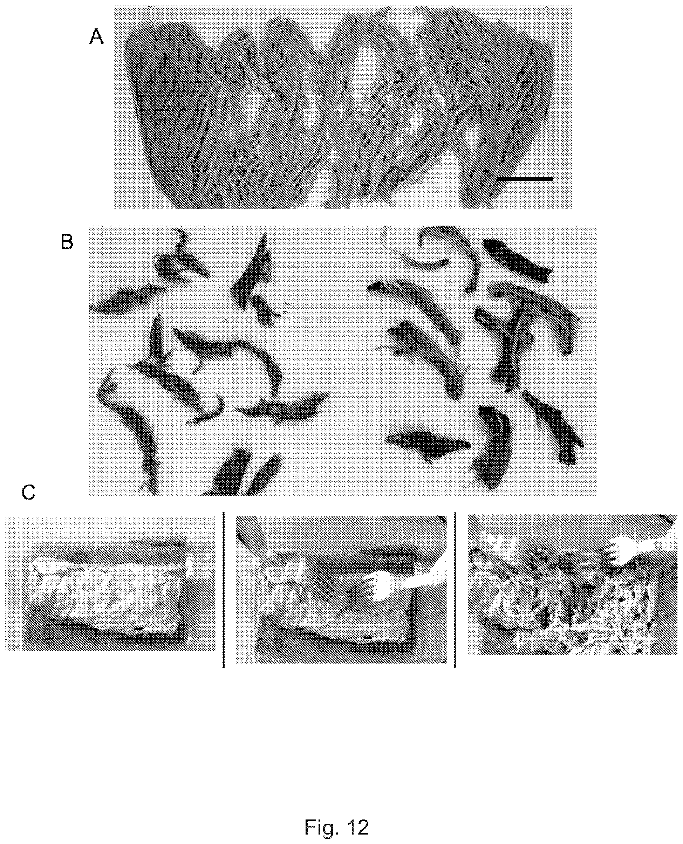

Fig. 12 shows photographs of the fibrous protein product after each method step according example 4;

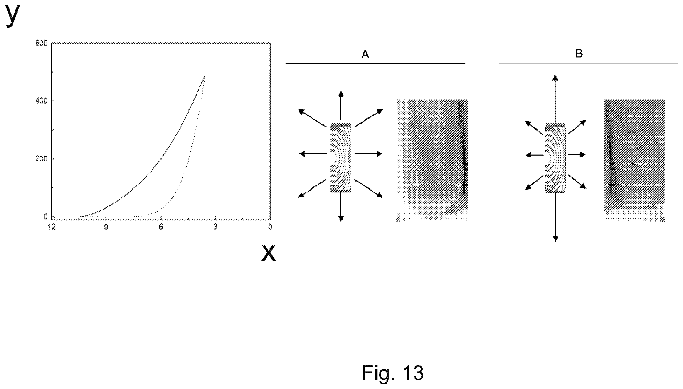

Fig. 13 shows experimental data according to example 6.

### Modes for Carrying Out the Invention

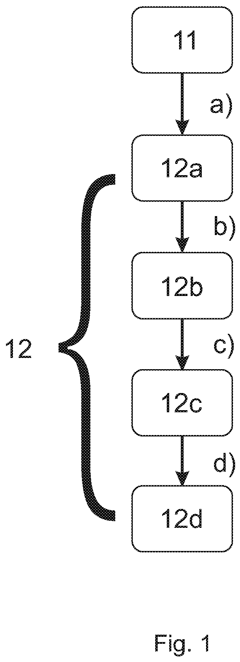

Fig. 1 shows a diagram of method steps. In particular, the wet textured product material 11 is the starting product for the method of producing a fibrous protein product 12. The wet textured product material 11 comprises at least 10wt% of proteins possessing a fibrous structure and at least 35wt% water.

An in particular deformed fibrous protein product 12 is the target product of the method and is selected from the group consisting of a deformed product 12a, an initial pulled product 12b, a block product 12c, and a final pulled product 12d.

An in particular deformed fibrous protein product 12 according to an advantageous embodiment of the invention is a slaughter-free protein product resembling processed meat products.

In an advantageous embodiment of the invention, the fibrous protein product 12 is a food product, in particular the food product resembles a processed meat product.

The first step a) of the method is to elastic-plastically deform the wet textured product material 11 and thereby changing the fibrous structure, to obtain the deformed product 12a.

In a further advantageous method step b) that might follow subsequently to step a), the deformed product 12a is pulled or cut apart to obtain the initial pulled product 12b.

A further advantageous embodiment of the method of producing a fibrous protein product 12 comprises after step b) the subsequent step c) wherein the initial pulled product 12b is formed to the block product 12c.

In a further advantageous step of the method of producing a fibrous protein product 12, the subsequent step after step c) is step d), wherein the block product 12c is pulled to obtain the finished pulled product 12d.

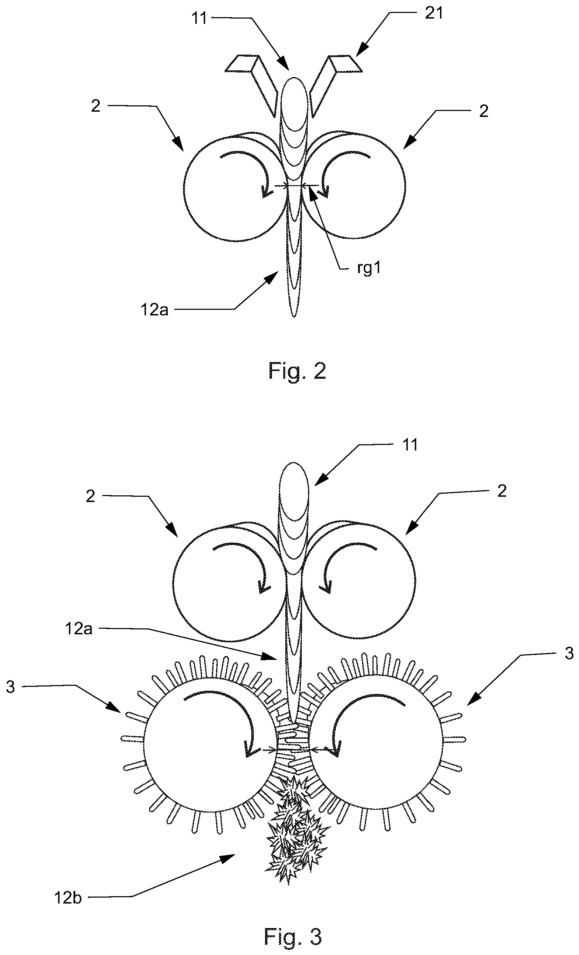

Fig. 2 shows a schematic of a device according to an embodiment of the invention for performing method step a). The device comprises rolling means 2 for elastic-plastically deforming the wet textured product material 11 to obtain the deformed product 12a.

In an advantageous embodiment of the device, a feeding mechanism 21 might be adapted to feed the wet textured product material 11 into the rolling means 2. Such feeding mechanism 21 might be a funnel as shown in Fig. 2 or might be a further pair of rolls, not shown in the figure. In Fig. 2, the rolling means 2 are configured as a pair of rolls with a roller gap rg1.

Advantageously, the roller gap rg1 has the size of rg1 ≤ 0.8 of the height h of the wet textured product material, in particular with rg1 ≤ 0.4 of the height h of the wet textured product material, wherein the product thickness is the shortest diameter of the product before entering the rolling means 2.

As shown in Fig. 2, the rolls of the pair of rolls are rotating against each other to deform the wet textured product material 11.

Advantageously, the wet textured product material temperature is within the range of 10°-100°C, in particular within the range of 30°-90°C, during the deforming step a).

Fig. 3 shows a further embodiment of the device according to the invention. The device in Fig. 3 not only comprises rolling means 2 for deforming the product material 11 to obtain the formed product 12a according to step a) of the method, but further comprises pulling means 3, for performing the method step b), wherein the formed product 12a is pulled apart into an initial pulled product 12b. Advantageously, as shown in Fig. 3, the pulling means 3 are configured as a pair of pin-rolls. The pin-rolls comprise a pair of rolls, wherein each roll comprises pins that are equally distributed over the surface of the respective roll. The initial pulled product 12b might comprise one or more fibrous pieces.

In a further embodiment, step a) of the method can be repeated multiple times to obtain the deformed product. In particular, the product material 11 might be fed into the rolling means 2 with different orientations of the fibrous structure, e.g. with the orientation of the fibrous structure being oriented parallel or normal to a direction in which the product material is fed into the rolling means.

Fig. 4 shows a schematic of the method steps c) and d). The initial pulled product 12b is formed to a block product 12c according to method step c).

In a further embodiment of the invention the initial pulled product 12b, optionally mixed with an adhesive matrix material, is formed to obtain the block product 12c.

In particular, such forming of the block product 12c from the initial pulled product 12b might be done by means of vacuum or pressing procedures.

The block product 12c might be packaged and the fibrous protein product 12 might be stored as a block product 12c, e.g. in a fridge or freezer.

In a method step d), the block product 12c might be pulled or cut apart again, in particular by means of hand or fork, to obtain the finished pulled product 12d. In particular, in method step d), the pulling needs less force than in step b). Therefore, the final pulled product 12d can be obtained from the block product 12c more easily, in particular with less force, than the initial pulled product 12b is obtained from the deformed product 12a.

Fig. 5 shows a section of a wet textured product material 11 according to an embodiment of the invention.

An advantageous wet textured product material 11 is a wet textured material, in particular textured by means of high moisture extrusion cooking, kneading, rolling, fiber spinning, printing and/or shear cell processing.

A further advantageous embodiment of the wet textured product material 11 comprises a protein selected from the group consisting of pea, soy, wheat, sunflower, pumpkin, rice, cereals, pulses, oil seeds, algae, single cells, fungi and fermented components.

In a further advantageous embodiment of the wet textured product material 11, the wet textured product material 11 comprises a component selected from the group consisting of further plant cells, starch, flavours, spices dietary fibres, hydrocolloids, salt, fat, oil, and fungal components, optionally muscle cells.

A further advantageous embodiment of the wet textured product material 11 comprises 10-65%wt of protein, in particular comprises 10-40%wt of protein.

A further advantageous embodiment of the wet textured product material 11 has an anisotropic structure as schematically shown in Fig. 5. The wet textured product material 11 comprises a fibrous structure that is directed along a direction r1.

The wet textured product material 11 has a height h, wherein the height h might be defined as the thickness of the wet textured product material 11.

Fig. 5 shows a schematic of a section of an advantageous embodiment of a wet textured product material 11 with the orientation of the fibrous structure in the product material 11. The fibrous structure is therefore anisotropic. Fig. 5 shows in particular the fibrous structure on a microscopic level. For method step a), the product material might be feed into a deforming mechanism with the fibrous structure being oriented into a direction r1 that is parallel to the fibre orientation of the fibrous structure or into a direction r2 that is normal to the fibre orientation of the fibrous structure.

Fig. 6 shows a schematic of an embodiment of a product material 11, in particular a schematic of a wet textured material produced by high moisture extrusion cooking. The product material 11 has an anisotropic structure on a macroscopic level. The product material still comprises the microscopic fibrous structure of Fig. 5 align along a profile as shown in Fig. 6, resulting from the flow profile in the texturization process. The embodiment in Fig. 6 has a length L and a width W. Advantageously, the embodiment of the product material 11 of Fig. 6 has a length L1 and a width W1 before being deformed in the method step a) and has a length L2 and a width W2 after being deformed to obtain the deformed product 12a. Advantageously, the relationship between the product material 11 and the deformed product 12a is: L1<L2 when rolling in direction r, and W1<W2 when rolling in direction normal to r.

Advantageously, the direction of the texturization in Fig. 6 is in the direction of the arrow r. The product material 11 can enter the deforming means, in particular a pair of rolls, for deforming the product material in a direction parallel to the direction r of the texturization or in a direction normal to the direction r of the texturization.

### Examples

To further illustrate the invention, the following examples are provided.

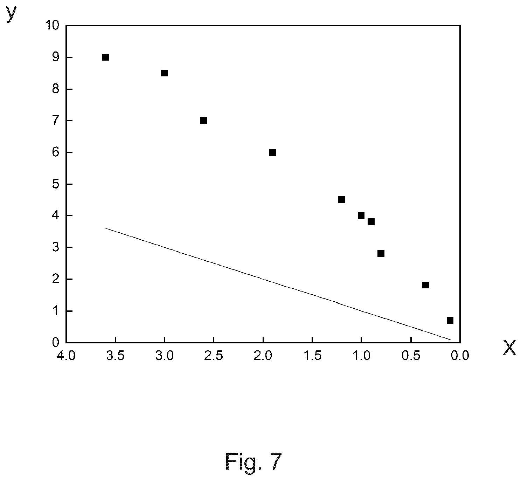

**Example 1:** Pea protein wet TVP as wet textured product material was rolled at varying roller distances. Wet TVP from pea protein was produced by co-rotating twin-screw high moisture extrusion cooking composed of 52 wt% water, rape seed oil, pea protein isolate, and pea fibers. The wet TVP was extruded at a height of 10.5 mm and a width of 60 mm and cut into pieces of approximately 100-120 mm in length. Rolling of wet TVP was performed with two counter-rotating rollers of a roller pair and at a rotating speed of 12.2 rpm. The roller gap was varied between 3.6 mm to 0.1 mm. The cut pieces of wet TVP, with a core temperature of 75-80°C, were inserted into the rollers in a direction normal to the texturization of the TVP. Thus, the rolling direction was normal to a direction to the flow direction in the extruder. As shown in Fig. 7, rolling with a roller gap of below the wet TVP height results in compression of the wet TVP. In **Fig. 7****,** the x-axis refers to the roller gap size [mm] and the y-axis refers to the height after rolling [mm]. The dots represent the measured height after rolling and the line the roller distance. The initial TVP has a thickness of 10.5 mm. The line indicates the theoretical height after rolling or a plastically deforming material, which does not show elastic recovery after passing the roller gap.

Roller gaps of 3.6 mm and 0.1 mm led to height reductions of height h of the TVP from 10.5 mm to 9 mm and to 0.7 mm, respectively, which is equal to an elastic recovery of 2.5 to 7 times compared to the thickness at maximum compression h_{comp} equal to the roller gap rg1.

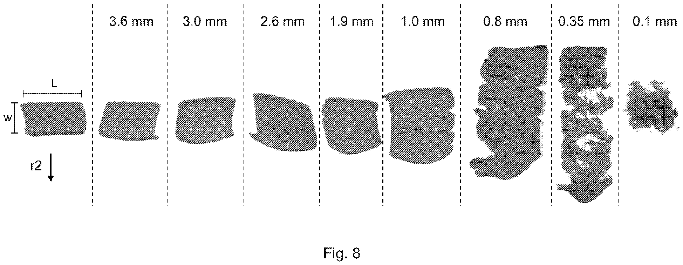

The height h of the TVP is in particular the smallest diameter of the wet textured product material, in particular the height of the TVP is illustrated in Fig. 5. For a plastically deforming material or a hard and brittle material, the height after rolling would be equal to the roller distance. Instead, the elastic-plastic wet TVP partly relaxes back after passing the roller gap. **Fig. 8** shows images of unrolled (picture on the very left) and rolled wet TVP at varying roller gap size (roller gap size is given in mm in the figure). The width w of the TVP increases with the decreasing roller gap size. The fibrous structure of the wet TVP is loosened and at smaller gap size torn apart into fibrous pieces when passing the roller gap. With decreasing gap size the rolled TVP becomes less coherent. At a gap size of 0.35 mm, the resulting rolled wet TVP is comparable to a loose carpet of long TVP fiber bundles. When further decreasing the gap size to 0.1 mm, the structure is more compressed and ripped apart resulting in flakes, which stick to the rollers and can be scraped off. Fig. 8 shows images of pea protein wet TVP (top view) unrolled and after one roller passing at a rotational speed of 12.2 rpm and at varying roller gap size indicated above. L refers to length and w refers to width of the TVP. The arrow indicates the direction at which the wet TVP was inserted in between the rollers. The rolling direction is normal to the flow direction in the high moisture extrusion cooking process.

The example demonstrates embodiments according to the invention, wherein the TVP as wet textured product material is deformed to obtain a deformed product with a deformed fibrous structure while preserving the fibrous microstructure.

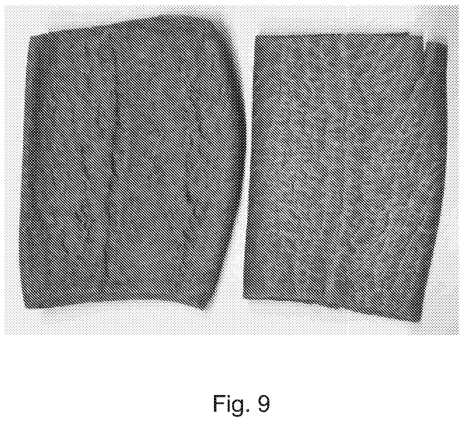

**Example 2:** Pea protein wet TVP rolled in hot and cold state. The pea protein wet TVP (Example 1) was inserted into the rollers at a gap size of 3.0 mm and a rotational speed of 12.2 rpm at a core temperature of 75-80°C **(****Fig. 9****,** left) and for comparison at a core temperature of 50°C **(****Fig. 9****,** right). As the wet TVP becomes harder, less elastic and more brittle upon cooling, the indentation of the TVP in between the rollers was impaired for the colder product. Furthermore, while the hotter wet TVP was torn apart along the fiber bundles, thus loosened, the colder product showed brittle fracturing on the surface as visible in Fig.9. Although the structure was loosened after rolling at colder temperature, rolling at hotter temperature was preferred to better preserve the fibrous structure, due to a favoured elastic recovery.

The example demonstrates the advantage of rolling the TVP at a preferred core temperature within the range of 70-90°C.

**Example 3:** Rolling of pea protein wet TVP parallel and normal to an extrusion direction r.

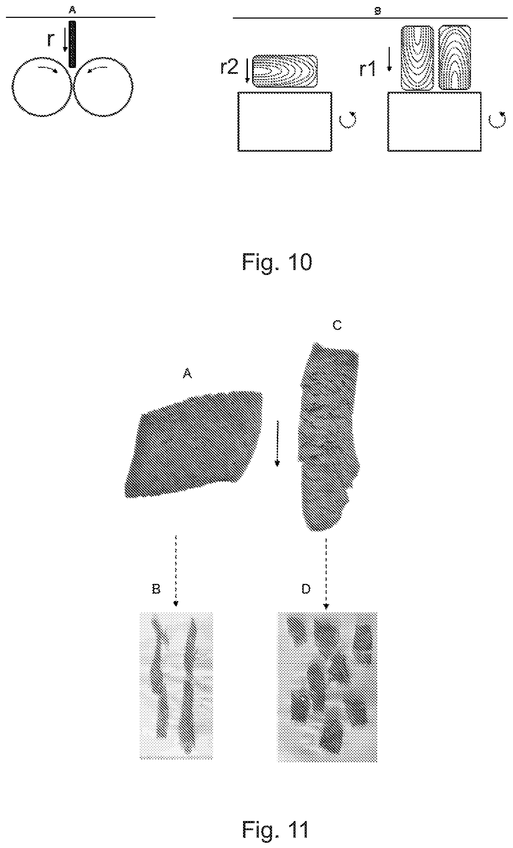

Pea protein wet TVP (from Example 1) as the wet textured product material was inserted into a pair of rolls. The TVP was rolled in either a direction r1 parallel or a direction r2 normal to the flow direction r of a fibre orientation of the fibrous structure in the high moisture extrusion cooking process, as schematically shown in **Fig. 10****,** and rolled at a rotational speed of 12.2 rpm and a gap size of 1.2 mm. While both rolled wet TVP, shown in **Fig. 11****,** had the same height after rolling, insertion in a direction r2 normal to the extrusion direction r led to an increase in width w as shown in Fig. 11 A and in a direction r1 parallel to the extrusion direction r to an increase in length l, as shown in Fig. 11 C. Insertion in a direction r2 normal to the extrusion direction r led to loosening of the long parallel fibers coming from flow alignment in high moisture extrusion cooking. Hence, after rolling, long fibers could be easily isolated from the wet TVP by pulling, e.g., by hand, shown in Fig. 11 B. These long isolated fibers and fiber bundles can be further processed into plant-based food products resembling processed meat products. In contrast, parallel rolling ripped apart the aligned fibers by overstretching, in particular by elastic-plastic deformation, resulting in a rough surface as visible in Fig. 11 C. As a consequence, the wet TVP is less strong when deforming it in a direction r1 parallel to the extrusion direction. Hence, it can be pulled into shorter fibrous pieces as depicted in Fig. 11D without the need of cutting, e.g. by shearing off with a blunt blade.

The example demonstrates the differences in texture of the deformed material 12a after being rolled in a direction r2 normal to the direction of the fibrous structure or in a direction r1 parallel to the direction of the fibrous structure.

**Example 4:** A food product made by rolling of wet TVP as wet textured product material 11. Wet TVP from pea and sunflowers was produced by co-rotating twin-screw high moisture cooking extrusion composed of 52 wt% water, sunflower oil, 37 wt% pea protein isolate, pea fibers, 2.4 wt% ground sunflower seeds. The wet TVP was extruded at a height of 10.5 mm and a width of 60 mm was cut into pieces of approximately 150-200 mm in length. The pieces of wet TVP as wet textured product material 11 were rolled according to method step a) in a direction r2 normal to a fibre orientation, at a rotational speed of the pair of rolls of 12.2 rpm and a roller gap size of 0.5 mm. The resulting deformed product 12a is a rolled loose fiber carpet (Fig. 10A). The loose fiber carpet was slightly pulled according to method step b) into an initial pulled product 12b in form of single fiber bundles resembling pulled pork in shape, appearance and texture (Fig. 10B). The pulled fibers were reassembled to a block product 12c according to method step c) by means of vacuum procedure, wherein the block product 12c was put into a vacuum bag, shaping it into a loaf and applying vacuum. The resulting plant-based fibrous loaf was marinated with oil-based barbecue marinate, baked for 10min at 200°C to generate a crust and heat the product. Subsequently, the baked loaf can be pulled into a final pulled product 12d according to method step d) into the single fiber bundles by help of a fork similar to the process of preparing pulled meat at home (Figure 10C).

The example demonstrates all process steps of the method.

**Example 5:** A food product made from rolled wet TVP as wet textured product material 11. Pea protein wet TVP (from example 1) was rolled according to method step a) to obtain a deformed product 12a, the procedure described in Example 1 with a roller gap size of 0.9 mm. The resulting deformed product 12a are loose fibrous TVP carpets, coated with an adhesive mixture prepared from 49 wt% sunflower oil, 49 wt% water and 2 wt% pea protein isolate by mixing for 5 min. Subsequently, the coated loose fibrous TVP carpets were stacked onto a large metal skewer traditionally used for meat-based products. The water-oil-protein mixture acted as adhesion layer in between the rolled carpets. The resulting food was roasted. Rolling allowed to preserve the fibrous structure and thus the meat-like texture but generate thin layers comparable to meat-based products. Also, the available space in between the fibers resulting from the roller process allowed for oil penetration from the coating during roasting, which hence increased juiciness known from meat-based products. The example therefore demonstrates the preparation of a food product with the method according to the invention.

**Example 6:** Pea protein wet TVP as a wet textured product material 11 (according to example 1) was cut into a piece of 10.5 mm in height, 60 mm in width and 10 mm in length. The small piece was either compressed normal to the flow direction r with a texture analyzer to a minimum height of 3.6 mm at a velocity of 1mm/s or rolled perpendicular to the flow direction r with a gap size of 3.6 mm. The compression and de-compression curves (Fig. 14) show high stiffness and partly elastic recovery. The x-axis refers to the TVP height [mm] and the y-axis refers to the compression force [N]. The dotted line refers to the de-compression and the full line to the compression force.

Rolling (Fig. 14B) in comparison to normal compression (Fig. 14A) exerts higher elongational forces onto the wet TVP, which supports the loosening of the fibrous structure by elongating the material product normal to the oriented fibrous structure. Thus, the fiber bundles / sheets / aggregates are pulled apart and get separated either during elongation or after elastic relaxation.

**Example 7:** Wet TVP as wet textured product material with a height of 10 mm consisting of 55wt% water, 22.5wt% microalgae powder, and 22.5wt% soy concentrate was heated to 80°C and rolled with a pair of smooth rolls at a rotational speed of 12.2 rpm and a gap size of 3.6 mm. Due to the high microalgae content, the wet TVP is highly plastically deformable and has a low stiffness. Hence, rolling results in substantial deformation of the products and only minor elastic recovery resulting in a product height after rolling of 4 mm. Rolling squeezes the fibrous structure of the wet TVP, comparable to a wheat dough, rather than loosening the fibrous structure.

**Example 8:** Wet TVP as wet textured product material with a height of 11 mm consisting of 62wt% water, 22wt% pea protein, and 16wt% pea fibers was cut into pieces of 15cm in width and 100cm in length and rolled at a gap size of 5.5mm at a temperature of 80-85°C, resulting in a height after rolling of 10mm. The rolled fibrous protein product was processed into pieces by a cutting device resembling processed meat.

## Claims

1. A method of producing a slaughter-free fibrous protein product (12), the method comprising the steps of:
(a) providing a wet textured product material (11), wherein the wet textured product material (11) comprises
- at least 10wt% of proteins possessing a fibrous structure
- at least 35wt% water; and
(b) elastic-plastically deforming the wet textured product material (11), thereby changing the fibrous structure, to obtain a slaughter-free fibrous protein product (12), wherein the slaughter-free fibrous protein product (12), is a deformed product (12a).

2. The method according to claim 1, wherein the method comprises at least one further step of processing the deformed product (12a) to a product selected from the group consisting of: an initial pulled product (12b), a block product (12c) and a final pulled product (12d), wherein
the initial pulled product (12b) is a deformed product (12a) that has been pulled or cut apart;
the block product (12c) is an initial pulled product (12b) that has been formed to obtain a block; and
the final pulled product (12d) is a block product (12c) that has been pulled apart.

3. The method according to claim 1 or 2, wherein the wet textured product material (11) is textured by means of high moisture extrusion cooking, printing, shear cell processing, kneading and/or fibre spinning, preferably wherein the wet textured product material (11) is textured by means of high moisture extrusion cooking, more preferably wherein the wet textured product material (11) is an extrudate.

4. The method according to any one of claims 2 to 3, wherein the further step of processing the deformed product comprises pulling or cutting apart the deformed product (12a) to obtain the initial pulled product (12b).

5. The method of claim 4, wherein the further step of processing the deformed product comprises additionally a step of further forming the initial pulled product (12b) to a block product (12c).

6. The method of claim 5, the method further comprising forming a mixture of the initial pulled product (12b) and an adhesive matrix material to obtain the block product (12c).

7. The method of claim 4 or 5, wherein the method comprises forming the block product (12c) from the initial pulled product (12b) by means of a pressing procedure.

8. The method of any one of claims 2 to 7, wherein the further step of processing the deformed product comprises additionally a step of pulling the block product (12c) to obtain a finished pulled product (12d).

9. The method according to any one of the preceding claims, wherein a protein component of the wet textured product material (11) is selected from the group consisting of pea, soy, wheat, sunflower, pumpkin, rice, cereals, pulses, oil seeds, algae, single cells, fungi, and fermented components, optionally wherein a component of the wet textured product material (11) is selected from the group consisting of further plant cells, starch, flavours, spices, dietary fibres, hydrocolloids, salt, fat, oil, and fungal component, further optionally consisting of muscle cells.

10. The method according to any one of the preceding claims, wherein the wet textured product material (11) comprises 10-65wt% of protein, in particular comprises 10-40wt% of protein, optionally wherein the wet textured product material (11) has an anisotropic structure.

11. The method according to any one of the preceding claims, wherein the wet textured product material temperature is within the range of 10°-100°C, in particular within the range of 30-90°C, during the deforming step a).

## Patentansprüche

1. Verfahren zur Herstellung eines schlachtfreien Faserproteinprodukts (12), wobei das Verfahren die Schritte umfasst:
(a) Bereitstellen eines nass texturierten Produktmaterials (11), wobei das nass texturierte Produktmaterial (11) umfasst:
- mindestens 10 Gew.-% Proteine mit einer Faserstruktur
- mindestens 35 Gew.-% Wasser; und
(b) elastisch-plastisch Deformieren des nass texturierten Produktmaterials (11), wodurch die Faserstruktur verändert wird, um ein schlachtfreies Faserproteinprodukt (12) zu erhalten, wobei das schlachtfreie Faserproteinprodukt (12) ein deformiertes Produkt (12a) ist.

2. Verfahren nach Anspruch 1, wobei das Verfahren mindestens einen weiteren Schritt des Verarbeitens des deformierten Produkts (12a) zu einem Produkt umfasst, das ausgewählt ist aus der Gruppe bestehend aus: einem anfänglichen gezogenen Produkt (12b), einem Blockprodukt (12c) und einem endgültigen gezogenen Produkt (12d), wobei
das anfängliche gezogene Produkt (12b) ein deformiertes Produkt (12a) ist, das auseinandergezogen oder auseinandergeschnitten wurde;
das Blockprodukt (12c) ein anfängliches gezogenes Produkt (12b) ist, das geformt wurde, um einen Block zu erhalten; und
das endgültige gezogene Produkt (12d) ein Blockprodukt (12c) ist, das auseinandergezogen wurde.

3. Verfahren nach Anspruch 1 oder 2, wobei das nass texturierte Produktmaterial (11) mittels Hochfeuchte-Extrusionskochen (high moisture extrusion cooking), Drucken, Scher-Zellverarbeitung, Kneten und/oder Faserspinnen texturiert wird, bevorzugt wobei das nass texturierte Produktmaterial (11) mittels Hochfeuchte-Extrusionskochen texturiert wird, stärker bevorzugt wobei das nass texturierte Produktmaterial (11) ein Extrudat ist.

4. Verfahren nach einem der Ansprüche 2 und 3, wobei der weitere Schritt der Verarbeitung des deformierten Produkts das Auseinanderziehen oder Auseinanderschneiden des deformierten Produkts (12a) umfasst, um das anfängliche gezogene Produkt (12b) zu erhalten.

5. Verfahren nach Anspruch 4, wobei der weitere Schritt der Verarbeitung des deformierten Produkts einen zusätzlichen Schritt des weiteren Formens des anfänglichen gezogenen Produkts (12b) zu einem Blockprodukt (12c) umfasst.

6. Verfahren nach Anspruch 5, wobei das Verfahren des Weiteren das Formen einer Mischung aus dem anfänglichen gezogenen Produkt (12b) und einem adhäsiven Matrixmaterial umfasst, um das Blockprodukt (12c) zu erhalten.

7. Verfahren nach Anspruch 4 oder 5, wobei das Verfahren das Formen des Blockprodukts (12c) aus dem anfänglichen gezogenen Produkt (12b) mittels eines Pressverfahrens umfasst.

8. Verfahren nach einem der Ansprüche 2 bis 7, wobei der weitere Schritt der Verarbeitung des deformierten Produkts einen zusätzlichen Schritt des Ziehens des Blockprodukts (12c) umfasst, um ein fertiges gezogenes Produkt (12d) zu erhalten.

9. Verfahren nach einem der vorangehenden Ansprüche, wobei ein Proteinbestandteil des nass texturierten Produktmaterials (11) ausgewählt ist aus der Gruppe bestehend aus Erbse, Soja, Weizen, Sonnenblume, Kürbis, Reis, Zerealien, Hülsenfrüchten, Ölsamen, Algen, einzelnen Zellen, Pilzen, und fermentierten Bestandteilen, gegebenenfalls wobei ein Bestandteil des nass texturierten Produktmaterials (11) ausgewählt ist aus der Gruppe bestehend aus weiteren Pflanzenzellen, Stärke, Aromen, Gewürzen, Ballaststoffen, Hydrokolloiden, Salz, Fett, Öl und mykotischem Bestandteil, des Weiteren gegebenenfalls bestehend aus Muskelzellen.

10. Verfahren nach einem der vorangehenden Ansprüche, wobei das nass texturierte Produktmaterial (11) 10 bis 65 Gew.-% Protein umfasst, insbesondere 10 bis 40 Gew.-% Protein umfasst, gegebenenfalls wobei das nass texturierte Produktmaterial (11) eine anisotrope Struktur hat.

11. Verfahren nach einem der vorangehenden Ansprüche, wobei die Temperatur des nass texturierten Produktmaterials (11) während des deformierenden Schritts a) innerhalb des Bereichs von 10° bis 100° C, insbesondere innerhalb des Bereichs von 30° bis 90° C liegt.

## Revendications

1. Procédé de production d'un produit protéique fibreux sans abattage (12), le procédé comprenant les étapes de :
(a) fourniture d'un matériau de produit texturé humide (11), le matériau de produit texturé humide (11) comprenant
- au moins 10 % en poids de protéines possédant une structure fibreuse
- au moins 35 % en poids d'eau ; et
(b) déformation élastique-de manière plastique du produit texturé humide (11), modifiant ainsi la structure fibreuse, pour obtenir un produit protéique fibreux sans abattage (12), le produit protéique fibreux sans d'abattage (12) étant un produit déformé (12a).

2. Procédé selon la revendication 1, dans lequel le procédé comprend au moins une étape supplémentaire de transformation du produit déformé (12a) en un produit choisi dans le groupe constitué par : un produit étiré initial (12b), un produit en bloc (12c) et un produit étiré final (12d), dans lequel
le produit étiré initial (12b) est un produit déformé (12a) qui a été étiré ou découpé ;
le produit en bloc (12c) est un produit étiré initial (12b) qui a été mis en forme pour obtenir un bloc ; et
le produit final étiré (12d) est un produit en bloc (12c) qui a été déchiré.

3. Procédé selon la revendication 1 ou 2, dans lequel le matériau de produit texturé humide (11) est texturé au moyen d'une cuisson par extrusion à haute humidité, d'une impression, d'un traitement de cellule de cisaillement, d'un malaxage et/ou d'un filage de fibres, de préférence dans lequel le matériau de produit texturé humide (11) est texturé au moyen d'une cuisson par extrusion à haute humidité, de préférence encore dans lequel le matériau de produit texturé humide (11) est un extrudat.

4. Procédé selon l'une quelconque des revendications 2 à 3, dans lequel l'étape supplémentaire de traitement du produit déformé comprend l'étirage ou la découpe du produit déformé (12a) pour obtenir le produit étiré initial (12b).

5. Procédé selon la revendication 4, dans lequel l'étape supplémentaire de transformation du produit déformé comprend en outre une étape de mise en forme supplémentaire du produit étiré initial (12b) en un produit en bloc (12c).

6. Procédé selon la revendication 5, le procédé comprenant en outre la mise en forme d'un mélange du produit étiré initial (12b) et d'un matériau de matrice adhésive pour obtenir le produit en bloc (12c).

7. Procédé selon la revendication 4 ou 5, dans lequel le procédé comprend la mise en forme du produit en bloc (12c) à partir du produit étiré initial (12b) au moyen d'une procédure de pressage.

8. Procédé selon l'une quelconque des revendications 2 à 7, dans lequel l'étape supplémentaire de transformation du produit déformé comprend en outre une étape consistant à étirer le produit en bloc (12c) pour obtenir un produit étiré fini (12d).

9. Procédé selon l'une quelconque des revendications précédentes, dans lequel un composant protéique du matériau de produit texturé humide (11) est choisi dans le groupe constitué par le pois, le soja, le blé, le tournesol, la citrouille, le riz, les céréales, les légumineuses, les graines oléagineuses, les algues, les cellules uniques, les champignons et les composants fermentés, dans lequel un composant du matériau de produit texturé humide (11) est sélectionné dans le groupe constitué d'autres cellules végétales, d'amidon, d'arômes, d'épices, de fibres alimentaires, d'hydrocolloïdes, de sel, de graisse, d'huile et de composants fongiques, constitué en outre éventuellement de cellules musculaires.

10. Procédé selon l'une quelconque des revendications précédentes, dans lequel le matériau de produit texturé humide (11) comprend 10 à 65 % en poids de protéines, en particulier 10 à 40 % en poids de protéines, le matériau de produit texturé humide (11) ayant éventuellement une structure anisotrope.

11. Procédé selon l'une quelconque des revendications précédentes, la température du matériau du produit texturé humide étant dans la plage de 10°-100 °C, en particulier dans la plage de 30-90 °C, pendant l'étape de déformation a).
